(19) Europäisches Patentamt
European Patent Office
Office européen des brevets

(11) **EP 3 889 832 A1**

(12) **DEMANDE DE BREVET EUROPEEN**

(43) Date de publication:
06.10.2021 Bulletin 2021/40

(51) Int Cl.:
*G06K 9/00* (2006.01)          *G01K 7/16* (2006.01)
*G01J 5/00* (2006.01)

(21) Numéro de dépôt: 21165762.2

(22) Date de dépôt: 30.03.2021

(84) Etats contractants désignés:
AL AT BE BG CH CY CZ DE DK EE ES FI FR GB
GR HR HU IE IS IT LI LT LU LV MC MK MT NL NO
PL PT RO RS SE SI SK SM TR
Etats d'extension désignés:
BA ME
Etats de validation désignés:
KH MA MD TN

(30) Priorité: 30.03.2020 FR 2003140

(71) Demandeur: Commissariat à l'énergie atomique
et aux énergies alternatives
75015 Paris (FR)

(72) Inventeurs:
• MAINGUET, Jean-François
38054 GRENOBLE CEDEX 09 (FR)
• BECKER, Sébastien
38054 GRENOBLE CEDEX 09 (FR)
• CHARRAT, Bruno
38054 GRENOBLE CEDEX 09 (FR)

(74) Mandataire: Brevalex
95, rue d'Amsterdam
75378 Paris Cedex 8 (FR)

(54) **CAPTEUR DE MOTIF THERMIQUE**

(57) Capteur (100) de motif thermique comportant une matrice de pixels (102) comprenant chacun :
- un élément de détection (106) formé par une portion de matériau déposable par impression dont le coefficient de température de résistance est supérieur à 0,2 %/K ;
- une portion métallique (110) configurée pour chauffer l'élément de détection ;
- une portion diélectrique (112) isolant électriquement une partie de l'élément de détection vis-à-vis de la portion métallique ;
et dans lequel :

- les éléments de détection d'une même colonne de pixels ont tous une même valeur de résistance électrique et sont couplés électriquement entre eux et à un circuit de lecture ;
- les portions métalliques d'une même ligne de pixels sont couplées électriquement entre elles ;
- le capteur comporte en outre une couche de blindage électromagnétique recouvrant tous les éléments de détection et isolée électriquement desdits éléments de détection.

FIG.1

EP 3 889 832 A1

**Description**

**DOMAINE TECHNIQUE**

L'invention concerne un capteur de motif thermique, avantageusement utilisé pour réaliser une capture d'empreinte digitale par détection thermique.

**ÉTAT DE LA TECHNIQUE ANTÉRIEURE**

Il est connu de réaliser un capteur d'empreinte digitale comportant des moyens de détection thermique. Ces moyens de détection thermique peuvent correspondre à des capacités pyroélectriques, des diodes, des thermistances, ou plus généralement tout élément thermosensible convertissant une variation de température subie par l'élément thermosensible en une variation d'un paramètre électrique de l'élément thermosensible tel qu'un potentiel électrique aux bornes de l'élément thermosensible, un courant électrique généré par l'élément thermosensible ou encore une variation de la résistance électrique de l'élément thermosensible.

La détection d'empreinte digitale peut être réalisée par des capteurs dits « passifs » qui exploitent une différence de température entre le doigt et le capteur, comme décrit dans les documents US 4 394 773, US 4 429 413 et US 6 289 114. Ces capteurs ont toutefois pour inconvénient de réaliser une mesure qui dépend uniquement de cette différence de température. Il peut donc arriver que le niveau du signal obtenu en sortie soit nul lorsque le doigt et le capteur sont à la même température, ou que le contraste des images capturées varie, ce qui pose alors des problèmes lors du traitement numérique ultérieur des images capturées.

Pour éliminer ces problèmes posés par les capteurs thermiques passifs, et également pour pouvoir réaliser une acquisition statique de l'empreinte où le doigt ne bouge pas, des capteurs dits « actifs » ont été proposés, comme par exemple celui décrit dans les documents US 6 091 837 et EP 2 385 486 A1.

Dans un tel capteur actif, chaque pixel peut comporter une capacité pyroélectrique formée de deux électrodes conductrices entre lesquelles une portion de matériau pyroélectrique est disposée, et un élément chauffant. Cet élément chauffant dissipe une certaine quantité de chaleur dans le pixel (notamment dans la portion de matériau pyroélectrique), et l'échauffement du pixel est mesuré au bout d'un certain temps d'acquisition en présence du doigt sur le capteur.

Au niveau de chaque pixel, il est possible de distinguer la présence d'une crête ou d'une vallée de l'empreinte capturée suivant qu'une partie de la chaleur apportée par l'élément chauffant est absorbée par la peau (pixel en présence d'une crête de l'empreinte) ou conservée dans le pixel (pixel en présence d'une vallée de l'empreinte). A l'issue du temps d'acquisition, la température d'un pixel en présence d'une crête, où de la chaleur est absorbée par la peau, est plus faible que celle d'un pixel en présence d'une vallée, où la chaleur n'est pas absorbée par la peau et reste dans le pixel.

Au premier ordre, un tel capteur permet de mesurer la capacité calorifique, également appelée chaleur massique ou capacité thermique massique, d'un élément (le doigt lors d'une capture d'empreinte digitale) en contact avec les pixels du capteur. Les mesures obtenues dépendent également de la conductivité et capacité thermique des divers matériaux mis en jeu entre les pixels du capteur et la partie de l'élément (crête ou vallée dans le cas d'une empreinte digitale) en présence sur chaque pixel.

Lors d'une capture d'un motif thermique par un capteur à détection thermique actif, tous les pixels du capteur sont lus de la même manière, et de manière régulière à la même cadence, c'est-à-dire avec une durée de mesure fixe identique pour tous les pixels. Cette durée de mesure, qui correspond à une durée pendant laquelle un pixel réalise la mesure thermique de l'élément se trouvant en contact avec lui, est généralement ajustée de manière à obtenir un bon contraste entre les crêtes et les vallées de l'empreinte digitale, c'est-à-dire est suffisamment longue pour que la chaleur ait eu le temps de se propager afin d'obtenir un niveau de signal important par rapport au bruit. Cette durée de mesure doit toutefois ne pas être trop longue pour que la durée totale de la capture reste acceptable par l'utilisateur et que la mesure ne soit pas perturbée par des mouvements du doigt sur la surface du capteur.

La lecture des pixels réalisée dans un capteur à détection thermique actif peut correspondre par exemple à une mesure des charges générées dans chaque pixel, qui est mise en œuvre avec un intégrateur de charges, mais d'autres méthodes sont possibles en fonction des moyens de détection thermique utilisés.

Le document WO 2018/020176 A1 décrit un capteur de motif thermique dans lequel l'adressage des pixels est réalisé par les lignes de matériau conducteur chauffant chacune les pixels d'une ligne de la matrice du capteur, sans avoir besoin de transistors au sein des pixels. Lorsque le courant de chauffage est coupé pendant une lecture de pixels, cela provoque une impulsion capacitive néfaste sur les colonnes de pixels formés de capacités pyroélectriques. La présence d'une couche de blindage dans un tel capteur évite de récupérer le champ électrique présent autour dans le capteur, en particulier celui lié à l'impulsion capacitive sus-décrite, et le protège également d'autres perturbations électromagnétiques externes comme les décharges électrostatiques.

Le document FR 3 069 938 A1 décrit un autre type de capteur thermique dans lequel la matrice de pixels est formée par des éléments résistifs correspondant à des capsules de silicium amorphe, dont la valeur de résistance électrique varie en fonction de la température. Des lignes de chauffage sont superposées aux colonnes d'éléments résistifs pour faire varier la valeur des résistances électriques des éléments résistifs d'une ligne de pixels à lire.

Les pixels peuvent être lus en tension via l'injection d'un courant constant dans les colonnes de pixels. Toutefois, lorsque le capteur comporte un nombre de lignes important, il convient d'utiliser des sources de courant injectant des courants de très faibles valeurs (moins de 50 nA) afin d'éviter des tensions trop importantes en entrée des circuits de lecture. De telles sources de courant sont complexes à réaliser.

En variante, les pixels peuvent être lus en courant en polarisant chaque colonne d'éléments résistifs avec une tension de polarisation, ce qui permet de récupérer en bas de chaque colonne un courant de lecture qui est ensuite intégré par un amplificateur transimpédance capacitif (CTIA). Il est également possible d'utiliser des résistances de compensation et des pixels de calibration afin de ne lire que le courant utile permettant de discriminer la présence de peau ou d'air sur les pixels lus.

Dans certains cas, l'utilisation de PVDF pour la réalisation d'un capteur de motif thermique est un inconvénient en raison de sa faible dureté, rendant le capteur sensible au poinçonnement, ainsi qu'en raison de sa température de Curie de l'ordre de 110 à 130 °C, qui, si elle est dépassée, rend le capteur inopérant. De plus, le fait de devoir réaliser une polarisation initiale du PVDF avec une très forte tension électrique, de l'ordre de 300 V ou 400 V, est une contrainte pour la réalisation industrielle de ces capteurs.

## EXPOSÉ DE L'INVENTION

Un but de la présente invention est de proposer un capteur de motif thermique réalisant une détection thermique du motif et ne comportant pas de capacité pyroélectrique à base de PVDF.

Pour cela, la présente invention propose un capteur de motif thermique d'un élément destiné à être en contact avec le capteur et par mesure de propriétés thermo-résistives d'un matériau de détection, comportant une matrice de plusieurs lignes et colonnes de pixels, chaque pixel comprenant au moins :

- un élément de détection formé par une portion du matériau de détection qui est déposable par impression et dont le coefficient de température de résistance est supérieur à environ 0,2 %/K ;
- une portion métallique configurée pour chauffer l'élément de détection du pixel ;
- une première portion de matériau diélectrique disposée entre l'élément de détection et la portion métallique, configurée pour assurer une isolation électrique d'au moins une partie de l'élément de détection vis-à-vis de la portion métallique ;

et dans lequel :

- les éléments de détection d'une même colonne de pixels ont tous sensiblement une même valeur de résistance électrique et sont couplés électriquement entre eux et à un circuit de lecture configuré pour lire un courant électrique destiné à traverser lesdits éléments de détection ;
- les portions métalliques d'une même ligne de pixels sont couplées électriquement entre elles ;
- le capteur comporte en outre une couche de blindage électromagnétique recouvrant tous les éléments de détection de la matrice et isolée électriquement desdits éléments de détection.

Ce capteur propose une matrice de pixels à détection thermique ne comportant pas de capacités pyroélectriques, et donc ne présentant pas les inconvénients liés à l'utilisation du PVDF ou de matériaux analogues au PVDF.

Le capteur selon l'invention réalise une détection thermique et ne correspond pas à un capteur de type capacitif ou détectant des différences de pression car dans le capteur selon l'invention, c'est une variation de résistance électrique qui est lue et non une valeur de capacité.

En outre, le capteur selon l'invention fait appel, pour la réalisation des éléments de détection, à un matériau déposable par impression, ce qui permet la réalisation du capteur avec des techniques de dépôt par impression peu coûteuses.

L'élément comprenant le motif thermique destiné à être détecté par le capteur est destiné à être contact physique avec le capteur, c'est-à-dire disposé contre le capteur lors de la détection de ce motif thermique.

Le motif thermique détecté par le capteur correspond avantageusement à une empreinte digitale, mais peut correspondre à tout motif ayant une capacité thermique et une chaleur massique.

Un matériau déposable par impression correspond à un matériau se trouvant initialement sous forme liquide ou pâteuse lors de son dépôt, et qui se solidifie ensuite soit naturellement soit en mettant en œuvre au moins une étape de solidification (par exemple séchage, polymérisation, etc.).

Un dépôt par impression correspond par exemple à l'une des techniques suivantes : sérigraphie, héliogravure ou rotogravure, typogravure, offset, dépôt par fente à extrusion, ou slot die.

La particularité de ces techniques d'impression est qu'elles ne nécessitent pas de mettre en œuvre des étapes supplémentaires de gravure après le dépôt : le matériau est directement déposé selon le motif souhaité. Par exemple, il n'est pas nécessaire de déposer un autre matériau sensible à la lumière (par exemple une résine photosensible), d'exposer ce matériau photosensible à travers un masque pour délimiter des zones, d'éliminer les parties exposées (ou non exposées si c'est une résine négative) à l'aide d'un solvant spécifique ou une autre technique, pour ensuite appliquer une technique de gravure adaptée au matériau désiré. On évite ainsi les technologies relativement chères de type photolithographie.

Avantageusement, le matériau de détection peut être du PEDOT:PSS, et/ou la couche de blindage électromagnétique peut comporter du PEDOT:PSS.

Dans ce cas, le PEDOT:PSS des éléments de détection et/ou de la couche de blindage électromagnétique peut comporter un rapport poids du PSS / poids du PEDOT compris entre environ 2,5 et 10.

Plus généralement, l'élément de détection est formé par une portion de matériau comportant du PEDOT:PSS et/ou du graphène et/ou des protéines de type Cytochrome C, et dont le coefficient de température de résistance est supérieur à environ 0,2 %/K.

La couche de blindage électromagnétique peut comporter un matériau identique à celui des éléments de détection. Une telle variante est très avantageuse car elle simplifie la réalisation du capteur.

Le capteur peut comporter en outre un circuit configuré pour appliquer sur les portions métalliques une tension de chauffage dissipant dans chaque pixel une puissance comprise entre environ 0,1 mW et 1 mW, ou encore entre 0,01 mW et 10 mW. La puissance de chauffage dissipée dans chaque pixel dépend notamment de la sensibilité du matériau de l'élément de détection, du circuit de lecture, et de l'épaisseur de la couche de protection recouvrant le pixel.

Les éléments de détection peuvent présenter une conductivité électrique comprise entre 0,3 et 20000 $S.m^{-1}$, en fonction de leur composition. Dans une configuration où les éléments de détection sont mis en série, il est possible de privilégier les fortes conductivités car la résistance totale a tendance à augmenter avec l'augmentation du nombre de pixels, alors que dans une configuration où les éléments de détection sont mis en parallèle, il est possible de privilégier l'inverse avec des plus faibles conductivités.

Le capteur peut comprendre plusieurs circuits de lecture chacun couplé électriquement à au moins une des colonnes de pixels, et chaque circuit de lecture peut comporter au moins :

- un amplificateur transimpédance capacitif dont une entrée est couplée électriquement aux éléments de détection de ladite au moins une des colonnes de pixels, et
- une capacité de contre-réaction comprenant une première électrode couplée électriquement à ladite entrée de l'amplificateur transimpédance capacitif et une deuxième électrode couplée électriquement à une sortie de l'amplificateur transimpédance capacitif, et
- un interrupteur couplé électriquement en parallèle à la capacité de contre-réaction.

Le capteur peut comporter en outre plusieurs résistances électriques de compensation chacune couplée électriquement aux éléments de détection d'une colonne de pixels et ayant une valeur égale à la somme des résistances électriques des éléments de détection de ladite colonne de pixels. De telles résistances électriques de compensation permettent de réaliser une mesure plus précise du motif thermique en éliminant tout ou partie de la partie fixe du signal lorsque le capteur est au repos.

Les résistances électriques de compensation peuvent comporter au moins une portion du matériau de détection de composition similaire (c'est-à-dire formés des mêmes éléments ou composés chimiques, et avec les mêmes concentrations) à celui des éléments de détection des pixels.

Le capteur peut comporter en outre plusieurs résistances électriques de calibration chacune couplée électriquement aux éléments de détection d'une colonne de pixels.

Les résistances électriques de calibration peuvent être formées par au moins une portion du matériau de détection de composition similaire à celui des éléments de détection des pixels, couplée thermiquement à une ligne métallique qui comporte une première extrémité reliée à la masse et une deuxième extrémité couplée électriquement aux portions métalliques des pixels.

Selon différents modes de réalisation, le capteur peut être tel que :

- les éléments de détection de chaque pixel sont formés par des portions du matériau de détection distinctes les unes des autres, ou
- les éléments de détection des pixels appartenant à une même colonne sont formés par une unique portion du matériau de détection, ou
- les éléments de détection des pixels appartenant à plusieurs colonnes juxtaposées sont formés par une unique portion du matériau de détection, ou
- les éléments de détection de tous les pixels du capteur sont formés par une unique portion du matériau de détection.

Les éléments de détection d'une même colonne de pixels peuvent être couplés électriquement en parallèle les uns des autres par une première ligne métallique couplée électriquement à des premières extrémités des éléments de détection de ladite colonne de pixels et sur laquelle une tension de polarisation est destinée à être appliquée, et par une deuxième ligne métallique couplée électriquement à des deuxièmes extrémités des éléments de détection de ladite colonne de pixels et par l'intermédiaire de laquelle les éléments de détection de ladite colonne de pixels sont couplés électriquement au circuit de lecture.

Au moins une première ligne métallique peut être commune à deux colonnes de pixels juxtaposées et/ou au moins une deuxième ligne métallique peut être commune à deux colonnes de pixels juxtaposées.

Le capteur peut comporter en outre une ligne métallique de polarisation électrique couplée électriquement aux éléments de détection des pixels, et dans chaque pixel, la première portion de matériau diélectrique isole électriquement l'ensemble de l'élément de détection vis-à-vis de la portion métallique.

Le capteur peut comporter en outre une couche diélectrique de protection recouvrant chacun des pixels.

**BRÈVE DESCRIPTION DES DESSINS**

La présente invention sera mieux comprise à la lecture de la description d'exemples de réalisation donnés à titre purement indicatif et nullement limitatif en faisant référence aux dessins annexés sur lesquels :

- la figure 1 représente schématiquement une partie d'un capteur de motif thermique selon un premier mode de réalisation de l'invention ;
- la figure 2 représente schématiquement un exemple d'empilement de matériaux du capteur de motif thermique, objet de la présente invention ;
- la figure 3 représente schématiquement un exemple de réalisation d'un des circuits de lecture couplé à une colonne de pixels d'un capteur de motif thermique, objet de la présente invention ;
- la figure 4 représente schématiquement une partie d'un capteur de motif thermique selon un deuxième mode de réalisation de l'invention ;
- la figure 5 représente le schéma électrique équivalent d'une colonne de pixels du capteur de motif thermique selon le deuxième mode de réalisation de l'invention, couplé à un des circuits de lecture du capteur ;
- la figure 6 représente schématiquement une partie d'un capteur de motif thermique selon un troisième mode de réalisation de l'invention ;
- la figure 7 représente le schéma électrique équivalent d'une colonne de pixels du capteur de motif thermique selon le troisième mode de réalisation de l'invention, couplé à un des circuits de lecture du capteur ;
- les figures 8 à 10 représentent chacune schématiquement une partie d'un capteur de motif thermique respectivement selon un quatrième, cinquième et sixième mode de réalisation de l'invention ;
- la figure 11 représente schématiquement une partie d'un capteur de motif thermique selon un septième mode de réalisation de l'invention et une vue en coupe d'un pixel du capteur.

Des parties identiques, similaires ou équivalentes des différentes figures décrites ci-après portent les mêmes références numériques de façon à faciliter le passage d'une figure à l'autre.

Les différentes parties représentées sur les figures ne le sont pas nécessairement selon une échelle uniforme, pour rendre les figures plus lisibles.

Les différentes possibilités (variantes et modes de réalisation) doivent être comprises comme n'étant pas exclusives les unes des autres et peuvent se combiner entre elles.

**EXPOSÉ DÉTAILLÉ DE MODES DE RÉALISATION PARTICULIERS**

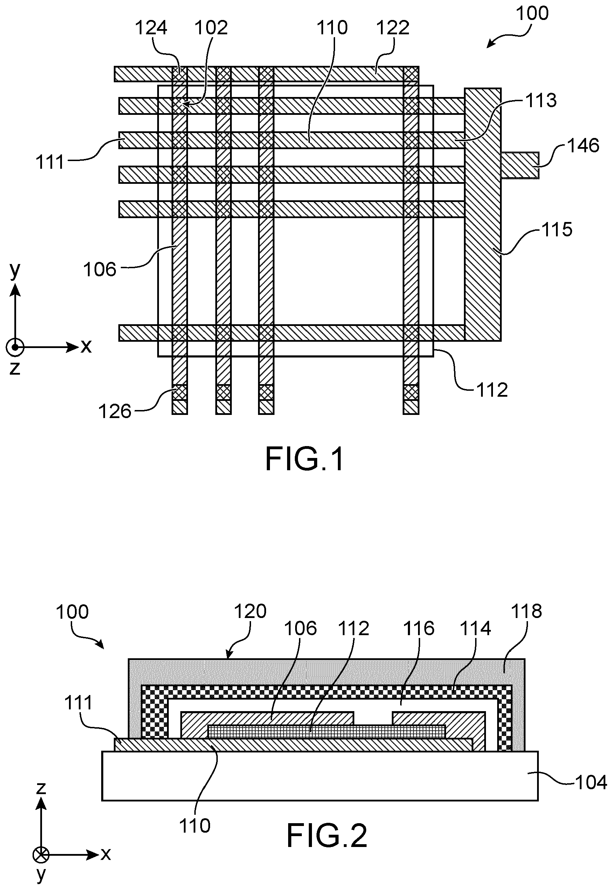

Un capteur 100 de motif thermique selon un premier mode de réalisation est décrit ci-dessous en lien avec la figure 1 qui représente schématiquement une vue de dessus d'une partie du capteur 100, ainsi qu'en lien avec la figure 2 qui représente une vue en coupe schématique d'un exemple d'empilement de matériaux du capteur 100.

Le capteur 100 comporte une matrice de plusieurs lignes et colonnes de pixels 102. Le pas des pixels 102, c'est-à-dire la distance entre les centres de deux pixels 102 voisins, est par exemple compris entre environ 25 $\mu$m et 100 $\mu$m, et par exemple égal à environ 50 $\mu$m.

Selon un exemple de réalisation, le capteur 100 peut comporter 92 lignes et 92 colonnes de pixels 102, et un pas de pixels 102 égal à environ 80 $\mu$m ou 90 $\mu$m. Selon un autre exemple de réalisation, le capteur 100 peut comporter 128 lignes de pixels et 128 colonnes de pixels 102, et un pas de pixels 102 égale à environ 50 $\mu$m. En variante, le capteur 100 peut comporter un tout autre nombre de lignes et/ou de colonnes de pixels 102, et un pas de pixels 102 de valeur différente de celles indiquées ci-dessus.

Les pixels 102 sont réalisés sur un substrat 104 de préférence isolant ou diélectrique comportant par exemple du verre, ou un semi-conducteur tel que du silicium comportant une couche isolante ou partiellement isolante recouvrant le semi-conducteur. Avantageusement, le substrat 104 peut être un substrat souple, par exemple à base de polyimide ou de PEN (polyéthylène naphtalate) ou de PET (polyéthylène téréphtalate).

Chaque pixel 102 comporte un élément de détection formé par une portion de matériau 106 déposable par impression dont le coefficient de température de résistance, ou TCR (« Temperature Coefficient of Résistance » en anglais), est supérieur à environ 0,2 %/K. Les éléments de détection 106 d'une même colonne de pixels 102 ont tous sensiblement une même valeur de résistance électrique (valeur pouvant un peu différer d'un élément de détection 106 à l'autre, par exemple d'au plus 1 %), par exemple comprise entre environ 200 kΩ et 4 MΩ, et sont couplés électriquement entre eux et à un circuit de lecture 108 (non visible sur les figures 1 et 2) configuré pour lire un courant électrique destiné à traverser les éléments de détection 106 de la colonne de pixels 102.

Dans le premier mode de réalisation décrit ici, les éléments de détection 106 des pixels 102 de chaque colonne sont formés par une seule portion continue (c'est-à-dire non interrompue entre les pixels 102 de la colonne) dudit matériau s'étendant parallèlement à l'axe Y visible sur la figure 1. Les éléments de détection 106 des pixels 102 de chaque colonne sont formés par des parties de cette portion de matériau se trouvant en regard de portions métalliques 110 configurées pour chauffer les éléments de détection 106. Par exemple, lorsque le pas des pixels 102 est égal à 90 μm, chacune des parties formant les éléments de détection 106 d'une colonne de pixels 102 a par exemple des dimensions latérales (dimensions selon les axes X et Y visibles sur la figure 1) égales à 90 μm x 45 μm, chacune de ces parties étant espacées de celles formant les éléments de détection 106 d'une colonne voisine d'une distance égale à environ 45 μm.

De manière avantageuse, le matériau formant les éléments de détection 106 est du PEDOT:PSS (mélange de deux polymères : poly(3,4-ethylenedioxythiophene) et polystyrenesulfonate), avec par exemple un rapport poids du PSS / poids du PEDOT compris entre environ 2,5 et 10. Ce rapport est par exemple ajusté tel que le TCR du matériau soit compris entre environ 2 %/K et 3 %/K, ou un peu moins élevé, par exemple 1 %/K, afin d'obtenir une résistivité plus adaptée aux tensions de polarisation admissibles, par exemple 3 volts, pour un courant adapté au circuit de détection, par exemple 10 nA, ce qui fera une résistance totale de 300 MΩ, soit 1.6 MΩ/carré.

L'épaisseur du matériau déposé pour former les éléments de détection 106 (dimension selon l'axe Z des éléments de détection 106) a de préférence une épaisseur comprise entre environ 100 nm et 1 μm.

Sur la figure 2, deux portions disjointes du matériau formant les éléments de détection 106 sont représentées, dans le but d'illustrer le fait que les éléments de détection 106 de deux colonnes de pixels 102 sont disjoints.

Chaque pixel 102 comporte également une portion métallique 110 configurée ici pour chauffer par effet Joule l'élément de détection 106 du pixel 102.

D'un point de vue électrique, dans ce premier mode de réalisation, les éléments de détection 106 de chaque colonne de pixels 102 correspondent à des résistances électriques reliées en série.

Dans le capteur 100, l'adressage des pixels 102 est réalisé par ligne, et cette fonction d'adressage est remplie par les portions métalliques 110. Lors d'une lecture d'une ligne de pixels 102 du capteur 100, les portions métalliques 110 de la ligne sont traversées par un courant qui chauffe par effet Joule. Une partie de la chaleur produite est transmise aux éléments de détection 106 des pixels 102 de cette ligne, et de la chaleur est également transmise vers les couches supérieures où une partie sera éventuellement absorbée si de la peau est en contact avec le pixel. Les portions métalliques 110 d'une même ligne de pixels 102 sont couplées électriquement entre elles. Sur l'exemple de réalisation représenté sur la figure 1, pour chaque ligne de pixels 102, les portions métalliques 110 des pixels 102 sont formées par un même élément de matériau métallique s'étendant sur toute la largeur de la matrice de pixels 102, parallèlement à l'axe X visible sur la figure 1.

Selon un exemple de réalisation, les portions métalliques 110 peuvent comporter du titane et/ou du molybdène et/ou de l'aluminium et/ou de l'or et/ou de l'argent. Les portions métalliques 110 peuvent également être formées par un empilement de plusieurs matériaux électriquement conducteurs, par exemple un empilement Ti / TiN / AlCu. L'épaisseur des portions métalliques 110 est par exemple comprise entre environ 0,1 μm et 1 μm.

Bien que non visible sur les figures 1 et 2, le capteur 100 comporte également un circuit configuré pour appliquer, sur chacune des portions métalliques 110 une tension de chauffage permettant d'adresser la ligne de pixels 102 associée à cette portion métallique 110. Les tensions de chauffage appliquées sur les portions métalliques 110 sont par exemple telles que, dans chaque pixel 102 adressé par l'une des portions métalliques 110, la puissance dissipée dans chaque pixel 102 soit comprise entre environ 0,1 mW et 1 mW, et par exemple égale à 0,15 mW. Ce circuit est couplé à des premières extrémités 111 des portions métalliques afin qu'il puisse appliquer, lors d'une lecture d'une ligne de pixels 102, un potentiel électrique sur la première extrémité 111 de la portion métallique 110 de la ligne de pixels 102 lue, différent de celui sur la deuxième extrémité 113. Des deuxièmes extrémités 113 des portions métalliques 110, opposées aux premières extrémités 111, sont couplées électriquement entre elles par une portion de matériau électriquement conducteur 115 sur laquelle un potentiel électrique de référence, par exemple la masse (portant la référence 146 sur la figure 1), est appliqué.

Dans chaque pixel 102, la portion métallique 110 est isolée électriquement de l'élément de détection 106 par une première portion de matériau diélectrique 112. Dans l'exemple de réalisation représenté sur la figure 1, les premières portions de matériau diélectrique 112 de tous les pixels 102 de la matrice sont formées par une première couche de matériau diélectrique continue (c'est-à-dire non interrompue entre les pixels 102) et commune à tous les pixels 102 de la matrice. Cette première couche diélectrique assure également l'isolation électrique entre les portions métalliques 110 de lignes de pixels 102 adjacentes. Cette première couche diélectrique a par exemple une épaisseur comprise entre environ 100 nm et 1 $\mu$m.

Le capteur 100 comporte en outre une couche de blindage électromagnétique 114 recouvrant tous les pixels 102 et qui est isolée électriquement des éléments de détection 106 des pixels 102 par une deuxième couche 116 de matériau diélectrique continue et commune à tous les pixels 102 de la matrice. Cette deuxième couche 116 assure également l'isolation électrique entre les éléments de détection 106 de colonnes de pixels 102 adjacentes. Cette couche de blindage électromagnétique 114 limite les perturbations subies par le capteur 100, notamment celles de fréquence égale à 50 Hz. Cette couche de blindage électromagnétique 114 a par exemple une épaisseur comprise entre environ 100 nm et 1 $\mu$m.

Avantageusement, la couche de blindage électromagnétique 114 comporte du PEDOT:PSS. Il est possible que le PEDOT:PSS de la couche de blindage électromagnétique 114 comporte un rapport poids du PSS / poids du PEDOT similaire à celui du PEDOT:PSS des éléments de détection 106.

Le capteur 100 comporte également une couche diélectrique de protection 118, de préférence présentant de bonnes propriétés contre l'abrasion, recouvrant tous les pixels 102. Sur la figure 2, la couche diélectrique de protection 118 recouvre la couche de blindage électromagnétique 114. Cette couche diélectrique de protection 118 comporte par exemple l'un des matériaux suivants : le revêtement OC-3021 ou OC-4122 commercialisé par la société DYMAX, ou le revêtement SilFORT PHC XH100 ou UVHC 7300 commercialisé par la société Momentive. L'épaisseur de la couche diélectrique de protection 118 peut être comprise entre environ 100 nm et 10 $\mu$m. Lorsque le matériau des éléments de détection 106 est du PEDOT:PSS, la couche diélectrique de protection 108 permet notamment de protéger ce matériau vis-à-vis de l'humidité susceptible d'être absorbée par ce matériau et qui modifie alors ses propriétés électriques.

Une face supérieure 120 de la couche diélectrique de protection 118 correspond à la surface de capture du capteur 100 au-dessus de laquelle se trouve le motif thermique destiné à être détecté, par exemple un doigt dont l'empreinte est destinée à être détectée et qui est en contact avec la surface de capture du capteur 100.

Le capteur 100 comporte également une autre portion métallique 122 à laquelle des premières extrémités 124 des portions de matériau formant les éléments de détection 106 sont couplées électriquement. Cette portion métallique 122 permet d'appliquer sur les premières extrémités 124 un potentiel électrique de polarisation aux sommets des colonnes d'éléments de détection 106. Les portions de matériau formant les éléments de détection 106 comportent également des deuxièmes extrémités 126, opposées aux premières extrémités 124, reliées aux circuits de lecture 108.

Les portions métalliques 110, 115 et 122 du capteur 100 sont avantageusement réalisées sous la forme d'un même niveau métallique, c'est-à-dire réalisés lors d'étapes communes à un même moment du procédé.

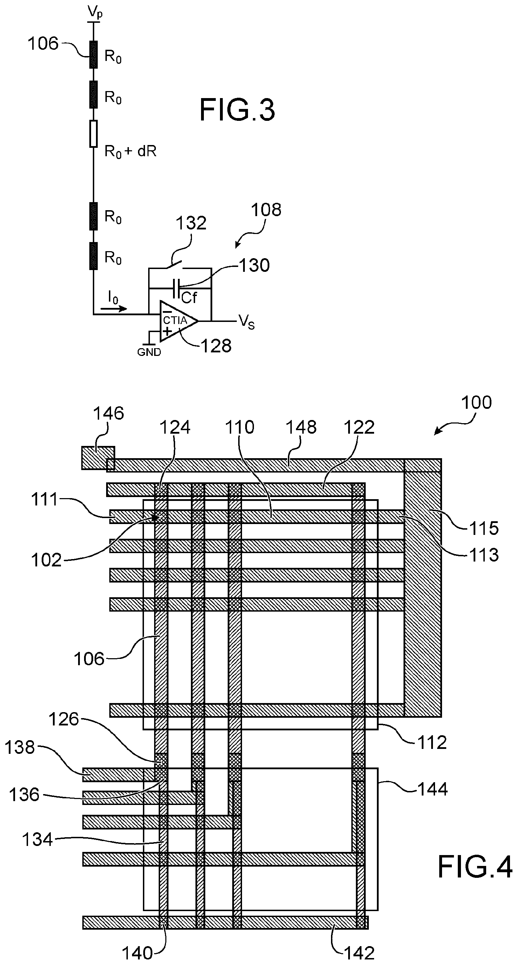

Un exemple de réalisation d'un des circuits de lecture 108 est représenté sur la figure 3. Le circuit de lecture 108 est relié à la portion de matériau formant les éléments de détection 106 d'une des colonnes de pixels 102. Chaque élément de détection 106 est symbolisé sous la forme d'une résistance électrique de valeur $R_0$, et les résistances électriques formées par les éléments de détection 106 d'une même colonne de la matrice de pixels 102 sont reliées en série. Sur la figure 3, l'élément de détection 106 qui est chauffé par la portion métallique 110 sur laquelle un potentiel électrique de chauffage est appliqué à une valeur de résistance électrique égale à $R_0$ + dR (qui correspond à une variation de résistance due au chauffage). Sur la figure 3, la tension de polarisation appliquée sur la première extrémité 124 de la colonne d'éléments de détection 106 est nommée $V_P$.

Le circuit de lecture 108 comporte un amplificateur transimpédance capacitif, ou CTIA, 128 comprenant une première entrée (l'entrée inverseuse sur l'exemple de la figure 3) couplée électriquement à la colonne d'éléments de détection 106, et une deuxième entrée (l'entrée non-inverseuse sur l'exemple de la figure 3) reliée à un potentiel électrique de référence, par exemple la masse GND. Une tension $V_S$ est obtenue en sortie de l'amplificateur 128.

Le circuit de lecture 108 comporte également une capacité de contre-réaction 130 de valeur Cf et couplée électriquement en parallèle de l'amplificateur 128, entre sa sortie et sa première entrée, et un interrupteur 132 également couplé électriquement en parallèle de l'amplificateur 128, entre sa sortie et sa première entrée.

L'application de la tension de polarisation $V_P$ sur la colonne d'éléments de détection 106 créé une circulation d'un courant $I_0$ à travers les éléments de détection 106. En l'absence de chauffage des éléments de détection 106 de la colonne, à un instant $t_0$, le courant $I_0$ est :

$$I_0(t_0) = V_P / (n.R_0) \qquad\qquad (1)$$

avec n correspondant au nombre d'éléments de détection 106 présents dans chacune des colonnes de pixels 102 de la matrice du capteur 100.

Du courant est appliqué à partir de l'instant $t_0$ sur les éléments de chauffage. Après une phase de chauffe d'une durée t, par exemple 1 ms, d'un des éléments de détection 106, c'est-à-dire lorsqu'un courant de chauffage est envoyé dans l'élément formant les portions métalliques 110 d'une des lignes de pixels 102, la résistance électrique d'un des éléments de détection 106 de la colonne de pixels 102 prend la valeur $R_0$+dR et le courant $I_0$ devient :

$$I_0(t) = V_P / (n.R_0+dR) \qquad (2)$$

Pour initialiser l'intégrateur de courant, l'interrupteur 132 est fermé un peu avant l'instant $t_0$ : les charges sur la capacité Cf sont annulées (court-circuit). Puis on ouvre l'interrupteur 132 juste après l'instant $t_0$ à l'instant $t_1$, par exemple au moins 1 microseconde ou 10 microsecondes, négligeable devant le temps de chauffe, ceci pour éviter l'impulsion électrostatique provoquée par le changement de tension. Le courant $I_0$ est alors intégré pendant la durée du chauffage dans la capacité Cf et la tension Vs suit linéairement la quantité de charges accumulées. A un instant $t_2$, la lecture de la tension Vs est réalisée, par exemple 1 ms après $t_1$.

En approximant le processus de chauffage à une réponse exponentielle (ce qui est le cas au premier ordre), l'évolution du courant $I_0$ à partir de l'instant $t_1$ peut s'exprimer par l'équation suivante :

$$I_0(t) = I_0(t_0) + \left(I_0(t_2) - I_0(t_1)\right).\left(1 - e^{-\frac{t}{\tau}}\right) \qquad (3)$$

Le terme $I_0(t_2)$ - $I_0(t_1)$ correspond à la partie du courant générée par la variation dR, et $\tau$ est la constante de temps liée au processus thermique vers l'équilibre.

L'amplificateur 128 génère la tension $V_S$ qui est l'image de l'intégrale des charges cumulées dans la capacité 130, et qui s'exprime ainsi :

$$V_S(t) = (1/Cf) \int I_0(t)\, dt \qquad (4)$$

En considérant $\Delta I_0 = I_0(t_2) - I_0(t_1)$ et en intégrant cette expression, le terme $V_S(t)$ devient alors :

$$V_S(t) = \left(\frac{1}{c_f}\right) I_0(t_0).t + \left(\frac{1}{c_f}\right) \Delta I_0 \left(t + \tau.e^{-\frac{t}{\tau}}\right) \qquad (5)$$

avec la valeur $V_S(t_2)$ qui est calculée entre les instants $t_1$ et $t_2$.

Le premier terme $\left(\frac{1}{c_f}\right) I_0(t_0).t$ est un offset superposé au signal à mesurer et correspond à un courant constant, par exemple avec un chauffage nul. Cet offset va limiter l'amplitude maximum de la tension de sortie de l'amplificateur 128. Il peut être d'une valeur très importante par rapport à celle du deuxième terme $\left(\frac{1}{c_f}\right) \Delta I_0 \left(t + \tau.e^{-\frac{t}{\tau}}\right)$ qui correspond au signal à mesurer, si $I_0(t_0) \gg \Delta I_0$. Les valeurs de la capacité 130, du courant de repos $I_0(t_0)$ et du temps d'intégration t sont donc choisies afin de ne pas saturer l'amplificateur 128. La valeur Cf de la capacité 130 doit être suffisamment petite pour mesurer le signal. Par exemple, avec des valeurs typiques $I_0(t_0)$ = 50nA et $t_2$- $t_1$ = 2 ms et une tension de sortie max $V_S$(max) = 4V, il est possible d'avoir Cf = 25pF. La valeur du signal à mesurer qui est superposée à une tension d'offset de 4V du signal à mesurer est par exemple d'environ 1,2 mV (avec $\tau$ = 0,6 ms). La valeur recherchée correspond à la discrimination entre un pixel en présence d'une crête de l'empreinte mesurée et un pixel en présence d'une vallée de l'empreinte mesurée. Par exemple, si la constante de temps $\tau$ pour un pixel en présence d'une vallée est de 0,7 ms et celle pour un pixel en présence d'une crête est de 0,5ms, la différence entre les valeurs de Vs($t_2$) pour ces deux types de pixels est de 130 $\mu$V. On voudra donc éliminer ou réduire fortement le terme constant correspondant au courant $I_0(t_0)$.

Un capteur 100 de motif thermique selon un deuxième mode de réalisation est décrit ci-dessous en lien avec la figure 4 qui représente schématiquement une vue de dessus d'une partie du capteur 100.

Par rapport au capteur 100 selon le premier mode de réalisation, le capteur 100 selon le deuxième mode de réalisation comporte en outre plusieurs résistances électriques de compensation 134 chacune couplée électriquement aux éléments de détection 106 d'une colonne de pixels 102 et ayant une valeur $R_{CMP}$ égale à la somme des résistances électriques des éléments de détection 106 de la colonne de pixels 102, c'est-à-dire telle que $R_{CMP} = n.R_0$.

Sur l'exemple de réalisation représenté sur la figure 4, les résistances électriques de compensation 134 sont formées sur le substrat 104 par des portions du même matériau que celui formant les éléments de détection 106. La géométrie de ces portions de matériau est identique pour toutes les colonnes de pixels 102 afin que les valeurs de ces résistances électriques de compensation 134 soient identiques pour toutes les colonnes de pixels 104.

Une première extrémité 136 de chacune des résistances électriques de compensation 134 est couplée électriquement à une portion métallique 138, formée avantageusement du même matériau que celui formant les portions métalliques 110. Chacune des portions métalliques 138 est associée à une seule résistance électrique de compensation 134. Cette portion métallique 138 permet de coupler électriquement la première extrémité 136 de la résistance électrique de compensation 134 au circuit de lecture 108 associée à la colonne de pixels 102.

Une deuxième extrémité 140 de chacune des résistances électriques de compensation 134 est couplée électriquement à une autre portion métallique 142, formée avantageusement du même matériau que celui formant les portions métalliques 110. Cette autre portion métallique 142 est commune à toutes les résistances électriques de compensation 134 et est destiné à l'application d'un potentiel électrique de compensation $V_{CMP}$ sur les deuxièmes extrémités 140 des résistances électriques de compensation 134.

Une couche de matériau diélectrique 144, comprenant avantageusement le même matériau que celui formant les premières portions de matériau diélectrique 112, isole électriquement les portions de matériau formant les résistances électriques de compensation 134 vis-à-vis des portions métalliques 138, excepté au niveau du contact électrique entre les premières extrémités 136 et les portions métalliques 138.

Enfin, sur la figure 4, le contact entre la portion de matériau électriquement conducteur 115 et la masse référencée 146 est réalisée par une autre portion métallique 148 se trouvant en dehors de la matrice de pixels 104.

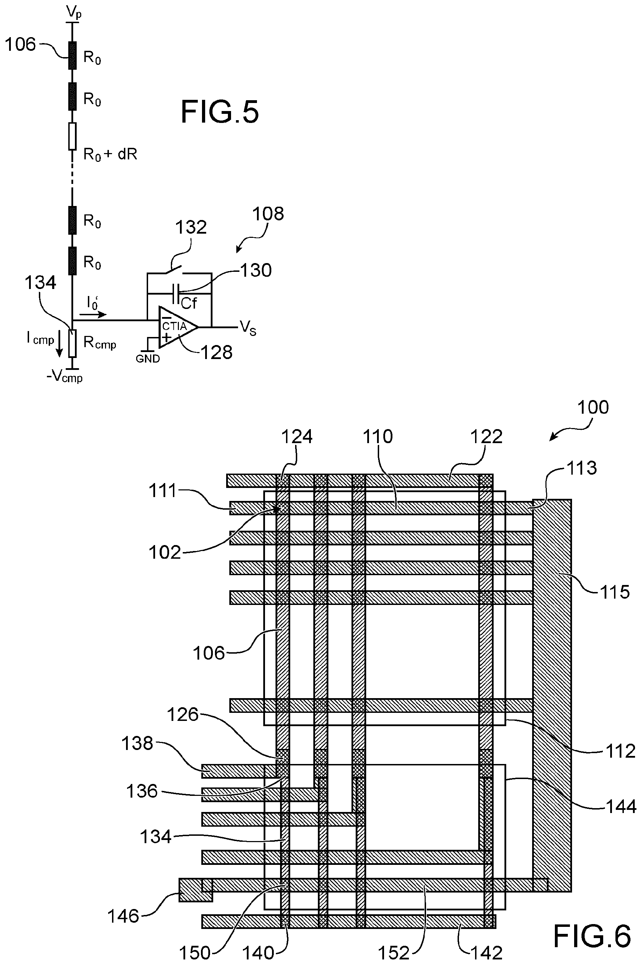

La figure 5 représente le schéma électrique d'une colonne de pixels 102 du capteur 100 selon le deuxième mode de réalisation, c'est-à-dire avec une résistance électrique de compensation 134 couplée électriquement aux éléments de détection 106 de chaque colonne de pixels 102.

Grâce à la résistance électrique de compensation 134 présente au bas de chacune des colonnes d'éléments de détection 106, le courant électrique lu par le circuit de lecture 108 ne comporte plus la composante $I_0(t_1)$. En effet, pour chaque colonne de pixels 102, la résistance électrique de compensation 134 est associée au potentiel électrique de compensation $V_{CMP}$, de valeur négative, générant un courant électrique de compensation $I_{CMP} = V_{CMP} / R_{CMP}$. Ce courant $I_{CMP}$ est soustrait au courant $I_0$ délivré par les éléments de détection 106 tel que le courant reçu en entrée de l'amplificateur 128 est $I_0' = I_0 - I_{CMP}$. Idéalement, le courant $I_{CMP}$ a une valeur égale à celle du courant traversant les n éléments de détection 106 telle que $I_{CMP} = V_P / (n.R_0)$. Le potentiel $V_{CMP}$ est donc choisi tel que $V_{CMP} = -V_P$. En l'absence de signal généré par le chauffage d'un des éléments de détection 106, on a donc $I_0'(t_0) = I_0'(t_1) = 0$.

D'autres valeurs de $V_{CMP}$ et $R_{CMP}$ sont possibles, du moment que la valeur du courant de compensation ICMP soit le plus proche possible de celle du rapport $V_P / (n.R_0)$.

La valeur de $V_{CMP}$ peut être ajustable et commune à toutes les colonnes de pixels 102 de la matrice du capteur 100. En variante, la valeur de $V_{CMP}$ peut être indépendante pour chacune de colonnes de pixels 102 pour permettre un réglage individuel compensant toute dispersion de la valeur $n.R_0$ entre les colonnes de pixels 102. Dans ce cas, le capteur 100 comporte plusieurs portions métalliques 142 chacune couplée à l'une des résistances électriques de compensation 134.

Des solutions intermédiaires sont également possibles, comme par exemple avoir plusieurs portions métalliques 142 chacune couplée électriquement à plusieurs résistances électriques de compensation 134.

Grâce aux résistances électriques de compensation 134, la valeur de la tension obtenue en sortie de l'amplificateur 128 est inférieure à la valeur de saturation de l'amplificateur 128 et la différence de valeurs à discriminer entre celle obtenue pour un pixel 102 en présence d'une crête de l'empreinte et celle obtenue pour un pixel 102 en présence d'une vallée de l'empreinte est plus facilement mesurable. Par exemple, avec une valeur Cf = 3 pF, la différence entre les valeurs de $Vs(t_2)$ pour ces deux types de pixels est de 3 mV.

De plus, grâce aux résistances électriques de compensation 134, une augmentation de la valeur de $V_P$ et de $V_{CMP}$ permet d'améliorer la dynamique du circuit de lecture 108. Ces résistances électriques de compensation 134 autorisent également une diminution de la valeur de Cf qui permet d'augmenter la sensibilité du circuit de lecture 108, ainsi qu'une augmentation du temps d'intégration $t_2 - t_1$ qui améliore l'amplitude des signaux lus.

La valeur de $V_{CMP}$ peut être ajustée en mettant en marche l'un des circuits de lecture 108, sans chauffage des éléments de détection 106. L'ajustement de $V_{CMP}$ est réalisé tel que $V_S = 0$ en sortie de l'amplificateur 128.

Un capteur 100 de motif thermique selon un troisième mode de réalisation est décrit ci-dessous en lien avec la figure 6 qui représente schématiquement une vue de dessus d'une partie du capteur 100.

Par rapport au capteur 100 selon le deuxième mode de réalisation, le capteur 100 selon le troisième mode de réalisation comporte en outre plusieurs résistances électriques de calibration 150, chacune couplée électriquement aux éléments de détection 106 d'une colonne de pixels 102 et ayant une valeur $R_0 + dR_{calib}$, et qui sont isolées thermiquement vis-à-vis de la surface 120 destinée à être en contact avec l'élément dont le motif thermique est mesuré (en les disposant par exemple à l'écart de la matrice de pixels 102, ou en recouvrant ces résistances électriques de calibration 150 par un matériau thermiquement isolant). Sur l'exemple de réalisation de la figure 6, les résistances électriques de calibration 150 sont formées par les mêmes portions de matériau que celles formant les résistances électriques de compensation 134 et les éléments de détection 106.

Les résistances électriques de calibration 150 sont destinées à être chauffées de manière similaire aux éléments de détection 106. Pour cela, les résistances électriques de calibration sont couplées thermiquement à une portion métallique 152 destinée à être traversée par un courant de chauffage. Afin de garantir que le courant passant par les portions métalliques 110 est le même que celui passant par la portion métallique 152 (et donc d'avoir $dR_{calib} = dR$), l'une des extrémités de la portion métallique 152 est couplée à la masse 146 et l'autre extrémité de la portion métallique 152 est couplée à la portion 115, et donc aux portions métalliques 110. Ainsi, le courant de chauffage envoyé à travers l'une des portions métalliques 110 traverse également la portion 115 et la portion métallique 152. En choisissant un pixel de calibration présentant une capacité thermique équivalente par exemple à la situation d'un pixel sans contact, la tension $V_S$ obtenue avec un pixel mesuré sans contact devient nulle. Avec un pixel en contact avec la peau, il ne reste que le signal correspondant, ce qui permet une meilleure amplification.

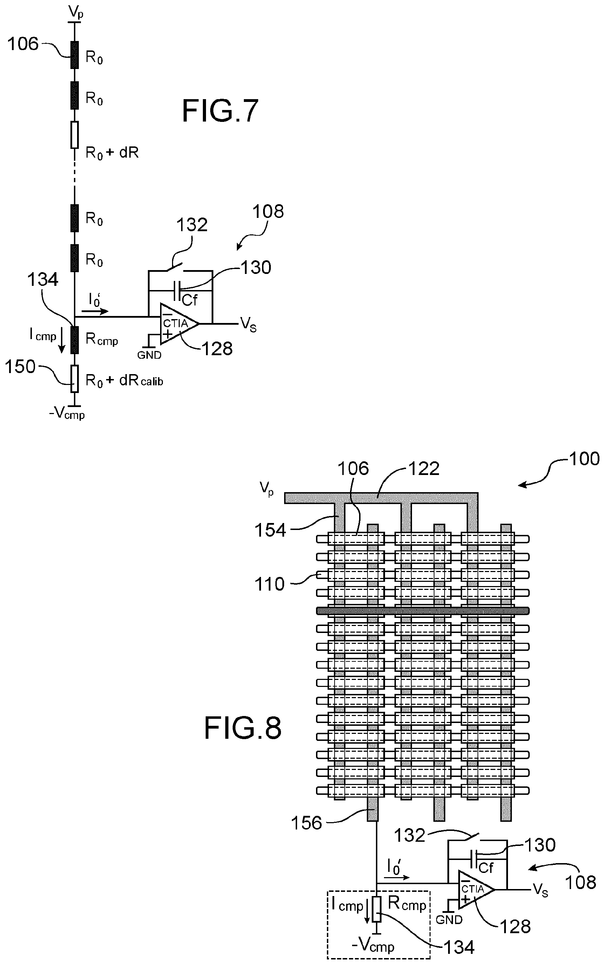

La figure 7 représente le schéma électrique d'une colonne de pixels 102 du capteur 100 selon le troisième mode de réalisation, c'est-à-dire avec une résistance électrique de compensation 134 et une résistance électrique de calibration 150 couplées électriquement en série aux éléments de détection 106 de chaque colonne de pixels 102.

En variante des trois modes de réalisation décrits précédemment, différentes configurations sont possibles, comme par exemple coupler électriquement les colonnes d'éléments de détection 106 aux circuits de lecture 108 non pas d'un seul côté de la matrice de pixels 102, mais de deux côtés opposés de la matrice de pixels 102, par exemple les colonnes paires d'un côté et les colonnes impaires de l'autre.

Dans les exemples et modes de réalisation précédemment décrits, l'empilement de matériaux utilisé pour former le capteur 100 correspond à celui représenté sur la figure 2, avec les portions de matériau déposable par impression dont le coefficient de température de résistance est supérieur à environ 0,2 %/K (c'est-à-dire les éléments de détection 106 et éventuellement les résistances électriques de compensation 134 et les résistances électriques de calibration 150) disposées entre les portions métalliques (c'est-à-dire les portions métalliques 110, 115, 122 et éventuellement 138, 142 et 152) et la couche de blindage électromagnétique 114.

En variante, il est possible que les portions métalliques soient disposées entre les portions de matériau déposable par impression dont le coefficient de température de résistance est supérieur à environ 0,2 %/K (avec ces portions disposées contre le substrat 104) et la couche de blindage électromagnétique 114. Selon une autre variante, la couche de blindage électromagnétique 114 peut être disposée entre les portions métalliques et les portions de matériau déposable par impression dont le coefficient de température de résistance est supérieur à environ 0,2 %/K (avec ces portions disposées contre le substrat 104).

Dans les modes de réalisation précédemment décrits, les éléments de détection 106 des pixels 102 appartenant à une même colonne sont formés par une unique portion de matériau déposable par impression dont le coefficient de température de résistance est supérieur à environ 0,2 %/K.

Un capteur 100 de motif thermique selon un quatrième mode de réalisation est décrit ci-dessous en lien avec la figure 8 qui représente schématiquement une vue de dessus d'une partie du capteur 100.

Dans ce quatrième mode de réalisation, les éléments de détection 106 de chaque pixel 102 sont formés par des portions de matériau déposable par impression dont le coefficient de température de résistance est supérieur à environ 0,2 %/K distinctes les unes des autres. De plus, les éléments de détection 106 d'une même colonne de pixels 102 sont couplés électriquement en parallèle les uns des autres par des première et deuxième lignes métalliques 154, 156. La première ligne métallique 154 est couplée électriquement à des premières extrémités des éléments de détection 106 de ladite colonne de pixels. La première ligne métallique 154 est configurée pour appliquer une tension de polarisation sur les premières extrémités des éléments de détection 106. La deuxième ligne métallique 156 est couplée électriquement à des deuxièmes extrémités des éléments de détection 106 de ladite colonne de pixels. Les éléments de détection 106 de ladite colonne de pixels sont couplés électriquement au circuit de lecture 108 par l'intermédiaire de la deuxième ligne métallique 156.

Au sein de l'empilement de couches formant le capteur 100, les lignes métalliques 154 et 156 peuvent être réalisées au même niveau que les portions métalliques 110, 115, 122 et éventuellement 138, 142 et 152, et avec le ou les mêmes matériaux métalliques.

Ce quatrième mode de réalisation a pour avantage de réduire la résistance électrique série formée par les éléments de détection 106. Par contre, la résolution devant être atteinte pour la réalisation des lignes métalliques 154, 156 est le double de celle nécessaire à la réalisation des éléments du capteur 100 selon les précédents modes de réalisation.

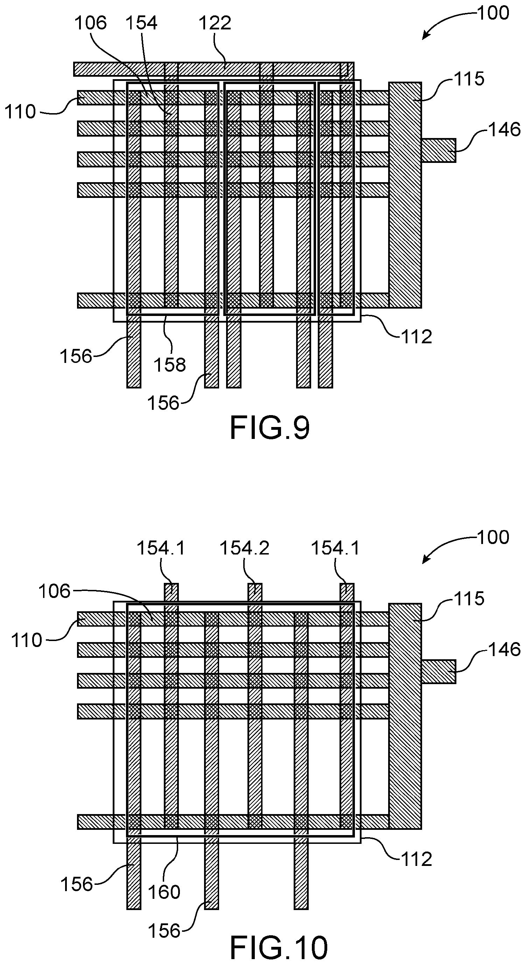

Un capteur 100 de motif thermique selon un cinquième mode de réalisation est décrit ci-dessous en lien avec la figure 9 qui représente schématiquement une vue de dessus d'une partie du capteur 100.

Dans ce cinquième mode de réalisation, comme dans le quatrième mode de réalisation, les éléments de détection 106 d'une même colonne de pixels 102 sont couplés électriquement en parallèle les uns des autres par une première ligne métallique 154 qui est couplée électriquement à des premières extrémités des éléments de détection 106 de ladite colonne de pixels, et par une deuxième ligne métallique 156 qui est couplée électriquement à des deuxièmes extrémités des éléments de détection 106 de ladite colonne de pixels. La première ligne métallique 154 est en outre configurée pour appliquer une tension de polarisation sur les éléments de détection, et la deuxième ligne métallique 156 est reliée au circuit de lecture 108.

Les éléments de détection 106 des pixels 102 appartenant à plusieurs colonnes juxtaposées (deux sur l'exemple de la figure 9) sont ici formés par une unique portion 158 de matériau déposable par impression et dont le coefficient de température de résistance est supérieur à environ 0,2 %/K.

Dans l'exemple de réalisation représenté sur la figure 9, chacune des premières lignes métalliques 154 apportant la tension de polarisation aux éléments de détection 106 est partagée par deux colonnes d'éléments de détection 106.

Par rapport au quatrième mode de réalisation, la résolution devant être atteinte pour la réalisation des lignes métalliques 154, 156 est moins importante, tout en conservant l'avantage de réduire la résistance électrique série formée par les éléments de détection 106.

Un capteur 100 de motif thermique selon un sixième mode de réalisation est décrit ci-dessous en lien avec la figure 10 qui représente schématiquement une vue de dessus d'une partie du capteur 100.

Comme dans les quatrième et cinquième modes de réalisation, les éléments de détection 106 d'une même colonne de pixels 102 sont couplés électriquement en parallèle les uns des autres par les première et deuxième lignes métalliques 154, 156 servant à appliquer la tension de polarisation sur les éléments de détection 106 et couplée électriquement les éléments de détection 106 au circuit de lecture 108.

Par contre, dans ce sixième mode de réalisation, les éléments de détection 106 de tous les pixels 102 du capteur 100 sont formés par une unique portion 160 de matériau déposable par impression dont le coefficient de température de résistance est supérieur à environ 0,2 %/K. Cela est possible grâce au fait que les premières lignes métalliques 154 sont réparties en deux groupes : un premier groupe de premières lignes métalliques 154.1 et un deuxième groupe de premières lignes métalliques 154.2 alternées les unes des autres (telles qu'une première ligne métallique 154.1 soit disposée entre deux premières lignes métalliques 154.2, et qu'une deuxième ligne métallique 154.2 soit disposée entre deux premières lignes métalliques 154.1). De plus, la lecture d'une ligne de pixels 102 est réalisée en deux temps successifs : un premier temps en lisant les pixels 102 polarisés par les premières lignes métalliques 154.1, et un deuxième temps en lisant les pixels 102 polarisés par les premières lignes métalliques 154.2.

Dans ce sixième mode de réalisation, chacune des deuxièmes lignes métalliques 156 couplées aux circuits de lecture 108 est partagée par deux colonnes de pixels 102 juxtaposées. Chaque circuit de lecture 108 est donc partagé par deux colonnes de pixels 102 juxtaposés.

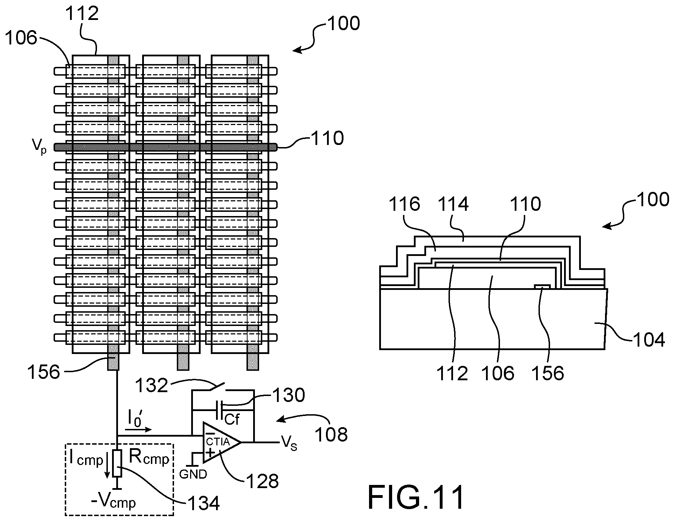

Un capteur 100 de motif thermique selon un septième mode de réalisation est décrit ci-dessous en lien avec la figure 11 qui représente schématiquement une vue de dessus d'une partie du capteur 100 et une vue en coupe d'un pixel du capteur 100 selon ce septième mode de réalisation.

Contrairement aux précédents modes de réalisation, le chauffage des éléments de détection 106 n'est pas obtenu par effet Joule grâce à la chaleur générée par le métal des lignes métalliques 110, mais directement par la chaleur générée au sein des éléments de détection 106 grâce au courant amené dans les éléments de détection 106 par les lignes métalliques 110. Comme cela est visible sur la figure 11, les portions diélectriques 112 ne sont pas formées par une couche de matériau diélectrique continue afin qu'au niveau de chaque pixel 102, la portion métallique 110 ait une partie qui soit en contact avec la portion de matériau formant l'élément de détection 106 du pixel 102.

Dans ce septième mode de réalisation, chacune des deuxièmes lignes métalliques 156 couple les éléments de détection 106 d'une colonne de pixels à un circuit de lecture 108. Le capteur 100 ne comporte pas les premières lignes métalliques 154.

Lors d'une lecture d'une ligne de pixels 102, une tension de polarisation $V_P$ est appliquée sur la portion métallique 110 de la ligne de pixels 102 à lire, et, avantageusement, le potentiel de référence appliqué sur les amplificateurs 128 des circuits de lecture 108 est appliqué sur les portions métalliques 110 des autres lignes de pixels 102 non lues.

En variante de ce septième mode de réalisation, il est possible qu'au moins une partie des pixels 102 d'une même colonne comporte des éléments de détection 106 formés par une portion de matériau commune.

Pour tous les modes de réalisation précédemment décrits, les différentes couches de matériau formant le capteur 100, et notamment la couche de matériau formant les éléments de détection 106, sont déposées par impression. Différentes techniques d'impression peuvent être mises en œuvre, comme par exemple :

-  sérigraphie : le matériau, sous forme liquide ou pâteuse, est déposé sur un masque disposé au préalable sur la surface sur laquelle le matériau est destiné à être déposé, puis est raclé pour que le matériau passe à travers les ouvertures formées dans le masque et qui définissent les portions de matériau à déposer,

- héliogravure ou rotogravure : un cylindre est gravé, par exemple avec une technique photosensible, selon le motif du matériau à déposer. Le matériau, sous forme liquide ou pâteuse, est déposé dans les trous gravés dans le cylindre, puis le cylindre est roulé sur la surface sur laquelle le matériau est destiné à être déposé,
- typogravure : technique proche de l'héliogravure, avec pour différence que le motif du matériau à déposer n'est pas gravé dans le cylindre, mais est formé en relief sur le cylindre,
- offset : un premier cylindre vient déposer le matériau, sous forme liquide ou pâteuse, sur un second cylindre qui passe ensuite sur la surface sur laquelle le matériau est déposé,
- dépôt par fente à extrusion, ou « slot die » : le matériau, sous forme liquide ou pâteuse, est poussé entre deux lèvres d'un équipement de dépôt avec un espacement entre les lèvres qui est maîtrisé et qui dépend du débit souhaité. L'équipement de dépôt ou la surface sur laquelle le dépôt est réalisé est déplacé pendant le dépôt pour former les lignes de matériau souhaitées.

Bien que non représenté, et pour tous les modes de réalisation précédemment décrits, le capteur 100 peut comporter en outre un circuit électronique de traitement apte à construire une image globale du motif thermique à partir des signaux obtenus en sortie des circuits de lecture 108. Ce circuit électronique de traitement peut également être apte à comparer cette image à plusieurs images stockées dans une base de données afin d'identifier si le motif thermique détecté correspond à l'un de ceux stockés dans la base de données. Le circuit électronique de traitement peut également être apte à afficher une image du motif thermique détecté.

Dans tous les modes de réalisation précédemment décrits, le matériau utilisé pour former les éléments de détection 106 correspond à du PEDOT:PSS. En variante, d'autres matériaux peuvent être utilisés pour la réalisation des éléments de détection 106. Par exemple, il est possible d'utiliser des protéines de type Cytochrome c pour la réalisation de ces éléments. Des détails sur l'utilisation de ces protéines, et pouvant être appliqués pour la réalisation du capteur 100 selon l'un des précédents modes de réalisation, sont donnés dans le document « Uncooled Long-Wavelength Infrared Sensors Using Cytochrome C Protein on Suspension Electrodes With CMOS Readout Circuits », de P-H Yen et al., IEEE Sensors Journal, vol.19, Issue 22, 15 juillet 2019, pp. 10221 - 10227. Selon un autre exemple, il est possible d'utiliser du graphène pour la réalisation de ces éléments. Des détails relatifs à ce graphène sont par exemple donnés dans les documents « Reduced Graphene Oxide as an Excellent Temperature Sensor » de Khurana G et al., Journal of Nanoscience and Nanotechnology Applications, Volume 2, Issue 1, et "A Flexible Temperature Sensor Based on Reduced Graphene Oxide for Robot Skin Used in Internet of Things", Sensors (Basel). 2018 May; 18(5): 1400.

## Revendications

1. Capteur (100) de motif thermique d'un élément destiné à être en contact avec le capteur et par mesure de propriétés thermo-résistives d'un matériau de détection, comportant une matrice de plusieurs lignes et colonnes de pixels (102), chaque pixel (102) comprenant au moins :

   - un élément de détection (106) formé par une portion du matériau de détection qui comporte du PEDOT:PSS et/ou du graphène et/ou des protéines de type Cytochrome C, et dont le coefficient de température de résistance est supérieur à environ 0,2 %/K ;
   - une portion métallique (110) configurée pour chauffer l'élément de détection (106) du pixel (102) ;
   - une première portion de matériau diélectrique (112) disposée entre l'élément de détection (106) et la portion métallique (110), configurée pour assurer une isolation électrique d'au moins une partie de l'élément de détection (106) vis-à-vis de la portion métallique (110) ;

   et dans lequel :

   - les éléments de détection (106) d'une même colonne de pixels (102) ont tous sensiblement une même valeur de résistance électrique et sont couplés électriquement entre eux et à un circuit de lecture (108) configuré pour lire un courant électrique destiné à traverser lesdits éléments de détection (106) ;
   - les portions métalliques (110) d'une même ligne de pixels (102) sont couplées électriquement entre elles ;
   - le capteur (100) comporte en outre une couche de blindage électromagnétique (114) recouvrant tous les éléments de détection (106) de la matrice et isolée électriquement desdits éléments de détection (106).

2. Capteur (100) de motif thermique selon la revendication 1, dans lequel le matériau de détection est du PEDOT:PSS, et/ou dans lequel la couche de blindage électromagnétique (114) comporte du PEDOT:PSS.

**3.** Capteur (100) de motif thermique selon la revendication 2, dans lequel le PEDOT:PSS des éléments de détection (106) et/ou de la couche de blindage électromagnétique (114) comporte un rapport poids du PSS / poids du PEDOT compris entre environ 2,5 et 10.

**4.** Capteur (100) de motif thermique selon l'une des revendications 2 ou 3, dans lequel la couche de blindage électromagnétique (114) comporte un matériau identique à celui des éléments de détection (106).

**5.** Capteur (100) de motif thermique selon l'une des revendications précédentes, comportant en outre un circuit configuré pour appliquer sur les portions métalliques (110) une tension de chauffage dissipant dans chaque pixel une puissance comprise entre environ 0,01 mW et 10 mW.

**6.** Capteur (100) de motif thermique selon l'une des revendications précédentes, dans lequel les éléments de détection (106) ont une conductivité électrique comprise entre environ 0,3 $S.m^{-1}$ et 20000 $S.m^{-1}$.

**7.** Capteur (100) de motif thermique selon l'une des revendications précédentes, comprenant plusieurs circuits de lecture (108) chacun couplé électriquement à au moins une des colonnes de pixels (102), et dans lequel chaque circuit de lecture (108) comporte au moins :

- un amplificateur transimpédance capacitif (128) dont une entrée est couplée électriquement aux éléments de détection (106) de ladite au moins une des colonnes de pixels (102), et
- une capacité de contre-réaction (130) comprenant une première électrode couplée électriquement à ladite entrée de l'amplificateur transimpédance capacitif (128) et une deuxième électrode couplée électriquement à une sortie de l'amplificateur transimpédance capacitif (128), et
- un interrupteur (132) couplé électriquement en parallèle à la capacité de contre-réaction (130).

**8.** Capteur (100) de motif thermique selon l'une des revendications précédentes, comportant en outre plusieurs résistances électriques de compensation (134) chacune couplée électriquement aux éléments de détection (106) d'une colonne de pixels (102) et ayant une valeur égale à la somme des résistances électriques des éléments de détection (106) de ladite colonne de pixels (102).

**9.** Capteur (100) de motif thermique selon la revendication 8, dans lequel les résistances électriques de compensation (134) comportent au moins une portion du matériau de détection de composition similaire à celui des éléments de détection (106) des pixels (102).

**10.** Capteur (100) de motif thermique selon l'une des revendications précédentes, comportant en outre plusieurs résistances électriques de calibration (150) chacune couplée électriquement aux éléments de détection (106) d'une colonne de pixels (102).

**11.** Capteur (100) de motif thermique selon la revendication 10, dans lequel les résistances électriques de calibration (150) sont formées par au moins une portion du matériau de détection de composition similaire à celui des éléments de détection (106) des pixels (102), couplée thermiquement à une ligne métallique (152) qui comporte une première extrémité reliée à la masse (146) et une deuxième extrémité couplée électriquement aux portions métalliques (110) des pixels (102).

**12.** Capteur (100) de motif thermique selon l'une des revendications précédentes, dans lequel :

- les éléments de détection (106) de chaque pixel (102) sont formés par des portions du matériau de détection distinctes les unes des autres, ou
- les éléments de détection (106) des pixels (102) appartenant à une même colonne sont formés par une unique portion du matériau de détection, ou
- les éléments de détection (106) des pixels (102) appartenant à plusieurs colonnes juxtaposées sont formés par une unique portion du matériau de détection, ou
- les éléments de détection (106) de tous les pixels (102) du capteur (100) sont formés par une unique portion du matériau de détection.

**13.** Capteur (100) de motif thermique selon l'une des revendications précédentes, dans lequel les éléments de détection (106) d'une même colonne de pixels (102) sont couplés électriquement en parallèle les uns des autres par une première ligne métallique (154) couplée électriquement à des premières extrémités des éléments de détection (106)

de ladite colonne de pixels (102) et sur laquelle une tension de polarisation est destinée à être appliquée, et par une deuxième ligne métallique (156) couplée électriquement à des deuxièmes extrémités des éléments de détection (106) de ladite colonne de pixels (102) et par l'intermédiaire de laquelle les éléments de détection (106) de ladite colonne de pixels (102) sont couplés électriquement au circuit de lecture (108).

14. Capteur (100) de motif thermique selon la revendication 13, dans lequel au moins une première ligne métallique (154) est commune à deux colonnes de pixels (102) juxtaposées et/ou au moins une deuxième ligne métallique (156) est commune à deux colonnes de pixels (102) juxtaposées.

15. Capteur (100) de motif thermique selon l'une des revendications précédentes, comportant en outre une ligne métallique de polarisation électrique (122) couplée électriquement aux éléments de détection (106) des pixels (102), et dans lequel, dans chaque pixel (102), la première portion de matériau diélectrique (112) isole électriquement l'ensemble de l'élément de détection (106) vis-à-vis de la portion métallique (110).

FIG.1

FIG.2

FIG.3

FIG.4

## FIG.5

$V_p$

106 — $R_0$

$R_0$

$R_0 + dR$

$R_0$

$R_0$

134

$I_0'$

$I_{cmp}$ — $R_{cmp}$

108

132

130

Cf

CTIA

$V_s$

GND

128

-$V_{cmp}$

## FIG.6

124    110    122    100

113

111

102

115

106

126

138

136

112

134

144

146

150    140    152    142

**FIG.7**

**FIG.8**

FIG.9

FIG.10

FIG.11

Europäisches Patentamt

European Patent Office

Office européen des brevets

# RAPPORT DE RECHERCHE EUROPEENNE

Numéro de la demande

EP 21 16 5762

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 276 533 A2 (COMMISSARIAT À L'ÉNERGIE ATOMIQUE ET AUX ÉNERGIES ALTERNATIVES [FR] ET) 31 janvier 2018 (2018-01-31) | 1 | INV. G06K9/00 G01K7/16 G01J5/00 |
| Y | * alinéa [0045] * | 2,3 | |
| A | * alinéa [0059] - alinéa [0070] * <br> * alinéa [0101] * <br> ----- | 4-15 | |
| A | KR 2016 0109266 A (RSC ADVANCES) 21 septembre 2016 (2016-09-21) * Claim 2 * <br> ----- | 1 | |
| X | FR 3 069 938 A1 (COMMISSARIAT ENERGIE ATOMIQUE [FR]) 8 février 2019 (2019-02-08) * revendication 1 * <br> ----- | 1-3 | |
| Y | EP 3 502 638 A1 (COMMISSARIAT A LENERGIE ATOMIQUE ET AUX ENERGIES ALTERNATIVES CEA [FR]) 26 juin 2019 (2019-06-26) * alinéa [0107] - alinéa [0117] * <br> ----- | 2,3 | |
| A | YI-FEI WANG ET AL: "Fully Printed PEDOT:PSS-based Temperature Sensor with High Humidity Stability for Wireless Healthcare Monitoring", SCIENTIFIC REPORTS, vol. 10, no. 1, 12 février 2020 (2020-02-12), pages 1-8, XP055757803, DOI: 10.1038/s41598-020-59432-2 * Introduction, first page * * Results and discussion, second page * <br> ----- <br> -/-- | 1-3 | DOMAINES TECHNIQUES RECHERCHES (IPC) <br><br> G06K <br> G01W <br> G01K <br> G01J |

Le présent rapport a été établi pour toutes les revendications

| Lieu de la recherche | Date d'achèvement de la recherche | Examinateur |
|---|---|---|
| La Haye | 7 avril 2021 | Boltz, Sylvain |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 21 16 5762

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | Khurana G ET AL: "Reduced Graphene Oxide as an Excellent Temperature Sensor", , 16 janvier 2018 (2018-01-16), XP055792562, Extrait de l'Internet: URL:http://article.scholarena.co/Reduced-Graphene-Oxide-as-an-Excellent-Temperature-Sensor.pdf [extrait le 2021-04-06] * page 4 * ----- | 1 | |
| A | YEN PO-HSIEN ET AL: "Uncooled Long-Wavelength Infrared Sensors Using Cytochrome C Protein on Suspension Electrodes With CMOS Readout Circuits", IEEE SENSORS JOURNAL, IEEE SERVICE CENTER, NEW YORK, NY, US, vol. 19, no. 22, 15 novembre 2019 (2019-11-15), pages 10221-10227, XP011750861, ISSN: 1530-437X, DOI: 10.1109/JSEN.2019.2928462 [extrait le 2019-10-16] * Section IV.B * ----- | 1 | DOMAINES TECHNIQUES RECHERCHES (IPC) |

Le présent rapport a été établi pour toutes les revendications

| Lieu de la recherche | Date d'achèvement de la recherche | Examinateur |
|---|---|---|
| La Haye | 7 avril 2021 | Boltz, Sylvain |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

    .............................................................
& : membre de la même famille, document correspondant

EPO FORM 1503 03.82 (P04C02)

**ANNEXE AU RAPPORT DE RECHERCHE EUROPEENNE**
**RELATIF A LA DEMANDE DE BREVET EUROPEEN NO.**

EP 21 16 5762

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-04-2021

| Document brevet cité au rapport de recherche | | Date de publication | Membre(s) de la famille de brevet(s) | | Date de publication |
|---|---|---|---|---|---|
| EP 3276533 | A2 | 31-01-2018 | EP FR US | 3276533 A2 3054696 A1 2018032781 A1 | 31-01-2018 02-02-2018 01-02-2018 |
| KR 20160109266 | A | 21-09-2016 | AUCUN | | |
| FR 3069938 | A1 | 08-02-2019 | AUCUN | | |
| EP 3502638 | A1 | 26-06-2019 | EP FR US | 3502638 A1 3075954 A1 2019195692 A1 | 26-06-2019 28-06-2019 27-06-2019 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4394773 A
- US 4429413 A
- US 6289114 B
- US 6091837 A
- EP 2385486 A1
- WO 2018020176 A1
- FR 3069938 A1

### Littérature non-brevet citée dans la description

- **DE P-H YEN et al.** Uncooled Long-Wavelength Infrared Sensors Using Cytochrome C Protein on Suspension Electrodes With CMOS Readout Circuits. *IEEE Sensors Journal,* 15 Juillet 2019, vol. 19 (22), 10221-10227
- **KHURANA G et al.** Reduced Graphene Oxide as an Excellent Temperature Sensor. *Journal of Nanoscience and Nanotechnology Applications,* vol. 2 (1
- Flexible Temperature Sensor Based on Reduced Graphene Oxide for Robot Skin Used in Internet of Things. *Sensors (Basel),* Mai 2018, vol. 18 (5), 1400